# EUROPEAN PATENT APPLICATION

(11) **EP 1 624 372 A1**
(43) Date of publication of application: **08.02.2006**
(21) Application number: 04018615.7
(22) Date of filing: 05.08.2004
(51) Int. Cl.: G06F 9/445

(54) **Compact storage of program code on mobile terminals**

(71) Applicant: Sony Ericsson Mobile Communications AB, 221 88 Lund (SE)
(72) Inventor: Bolanowski, Wladyslaw, 230 40 Bara (SE); Wadman, Johan, 226 47 Lund (SE)
(74) Representative: Körber, Martin Hans

(57) **Abstract**

A memory space saving storage of program code is provided on an electronic equipment for wireless communication, by providing a respective electronic equipment (1) comprising first storage means (2) for a non-volatile storage of data, program code data (100, 101, 100', 103, 101') stored in the first storage means (2), and second storage means (3) being adapted to enable an execution of an executable instance of programme code data. Hereby, the programme code data (100, 101, 100', 103, 101') stored in the first storage means (2) comprise first program code data (101, 101') in compressed form and further code data (100, 100', 103) in non-compressed form, with the further code data comprising second program code data (101, 101') that are adapted to convert the first program code data (101, 101') into an executable instance (101*, 101'*) of the same and to transfer said executable instance to the second storage means (3).

## Description

### TECHNICAL FIELD OF THE INVENTION

The present invention relates to an electronic equipment for wireless communication, particularly to an electronic equipment for wireless communication utilising a non-volatile memory for storing program data.

### DESCRIPTION OF RELATED ART

Today's electronic equipment for wireless communication like e.g. portable radio communication equipment such as mobile telephones, pagers, or communicators like for instance electronic organisers, smartphones, PDA's (Personal Digital Assitants) or other wireless communication appliances alike, are equipped with a non-volatile memory device retaining its data even in the power-off state for storing program code data required to operate the respective electronic equipment. Usually, the executable program code is quite big in size. Accordingly, the storage of the program code in a non-volatile memory like e.g. a flash memory, appears to contribute considerably to the production cost of an mobile terminal. The term 'mobile terminal' as used in the context of this specification forms a synonym for the term 'electronic equipment for wireless communication', and emphasises that the respective equipment acts as a terminal in a communication system. Memory devices that can be used as non-volatile storage means in a mobile terminal are only available in particular sizes, like units with storage capacities of e.g. 16 MB, 32 MB, and integer multiples of these values. If the extent of a program version to be stored exceeds the capacity of the planned memory device and the next bigger memory has to be used instead, a considerable increase in production cost will be the consequence. Assuming that a program code of close to 16 MB is compressible by about 50 %, then an 8 MB NAND flash memory could be used, which would save about 1 US$ per mobile terminal in production cost.

It is therefore an object of the present invention to provide a compact storage of program code on an electronic equipment for wireless communication.

### SUMMARY

The invention is achieved by an electronic equipment for wireless communication and a method for a memory space saving storage of program code on an electronic equipment for wireless communication, both as set out in the appended claims.

In particular, the present invention is achieved by an electronic equipment for wireless communication, comprising first storage means for a non-volatile storing of data, program code data stored in the first storage means, and second storage means being adapted to enable an execution of an executable instance of programme code data. Hereby, the programme code data stored in the first storage means comprise first program code data in compressed form and further program code data in non-compressed form, with the further code data comprising second program code data that are adapted to convert the first program code data into an executable instance of the same and to transfer said executable instance to the second storage means.

It is to be noted that the terms "comprises" and "comprising" when used in this specification are taken to specify the presence of stated features, integers, steps or components, but do not preclude the presence or addition of one or more other features, integers, steps, components or groups thereof.

The method for a memory space saving storage of program code on an electronic equipment for wireless communication, which further achieves the above object, comprises steps for preparing first program code data representing first program code, preparing further code data comprising second program code data representing a second program code, compressing the first program code data, and transferring the compressed first program code data and the further code data to a non-volatile memory of the electronic equipment for wireless communication. The second program code hereby comprises a logic, which performs upon being executed on the electronic equipment for wireless communication a conversion of the compressed first program code data in an executable instance of the first program code data and a transfer of the executable instance of the first program code data to a memory adapted for an execution of program code.

The present invention enables an effective usage of expensive non-volatile storage space on mobile terminals, and also opens the possibility of optimising the total memory costs . It allows to store program code, the size of which executable instance will exceed the size of the non-volatile storage space available without being required to switch to a memory device with a higher capacity.

Further advantageous developments are set forth in the dependent claims.

In an advantageous embodiment cost saving is achieved by providing a volatile memory for locating therein at least a first part of the second storage means. The first storage means is cost-effectively located in a memory with sequential access, since respective memory devices are available at very reasonable prices. Alternatively, an optimisation of memory cost is achieved by locating the first storage means in a memory with random access, since this allows to execute at least part of a program code in the surplus space of the memory device, which is not occupied by stored program code or other data.

Particularly in the latter case, where the first storage means is formed by a memory with random access, the first storage means and a further part of the second storage means may further be located within the same physical storage device for enabling an optimised usage of the totally available memory space. Hereby, the further code data further comprise third program code data, which are stored in the further part of the second storage means, and which are adapted to be executed in place for making full use of the totally available storage capacities. The third program code data are preferably enclosed in the further code data to be executed in place within the non-volatile memory.

The second program code data are effectively launched by use of an initial boot code provided in a read only memory (ROM) of the electronic equipment for wireless communication. Further, the second program code data may advantageously be launched by use of a controller being adapted to execute a code segment, which is stored within the controller and that enables a launch of the second program code data.

The production cost reduction is most effective when implementing the electronic equipment in form of a mobile radio terminal, as these devices provide quite a number of different features like e.g. organisers, games, synthesisers and the like which require program code of big proportions to be stored in low capacity non-volatile memories.

The memory space saving storage of program code can advantageously be enhanced by a further method step of concatenating the compressed first program code data and the further code data to a program data set, and transferring the compressed first programme code data and the second program code data in form of the program data set to the non-volatile memory of the electronic equipment for wireless communication.

To provide a certification, the first program code data and the second program code data or the program data set, if available, are signed with a certificate.

### BRIEF DESCRIPTION OF THE DRAWINGS

In the following description, the invention is explained in more detail with respect to special embodiments and in relation to the enclosed drawings, in which:
- Figure 1: is a block diagram showing the functional units of an electronic equipment for wireless communication according to the present invention,
- Figure 2: is a flow chart showing the basic steps for a compact storage of a program code according to one embodiment of the present invention,
- Figure 3: is a flow chart showing the basic steps required for executing program code stored according to the method of Figure 2,
- Figure 4a to Figure 4d: show the memory management corresponding to a method according to Figure 3,
- Figure 5: is a flow chart showing the basic steps for a compact storage of a program code according to a further embodiment of the present invention,
- Figure 6: is a flow chart showing the basic steps required for executing program code stored according to the method of Figure 5,
- Figure 7a and Figure 7b: show the memory management corresponding to a method according to Figure 6.

### DETAILED DESCRIPTION OF EMBODIMENT

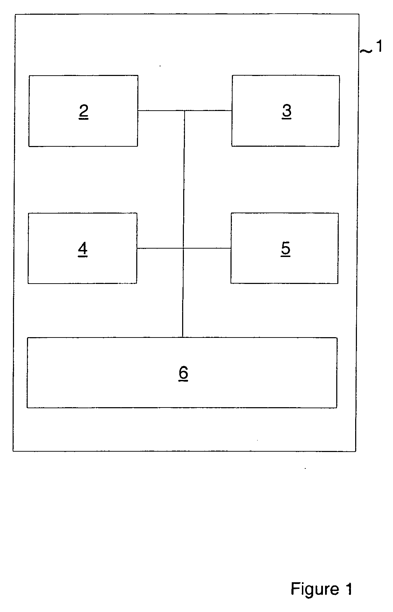

A mobile terminal 1 according to the present invention is shown in form of a block diagram representation in Fig. 1. The mobile terminal 1 can be a portable radio communication equipment such as a cellular mobile terminal or mobile telephone, respectively, a pager or any other kind of communicator like for instance an electronic organiser, a smartphone, a PDA or other wireless communication appliances alike. Only those elements of the mobile terminal are detailed in Fig. 1, which are essential for the understanding of the present invention. Further elements, such as e.g. coding means, modulation means and the like which are also necessary for the operation of the electronic equipment 1 are represented in their totality by the operational means 6 and are not directly explained for the sake of clarity.

The mobile terminal according to the present invention comprises a first storage means 2 and a second storage means 3, whereby the first storage means 2 is formed within a non-volatile memory device on the mobile terminal 1. The second storage means 3 is formed in a memory device preferably providing random access. As will be explained in detail below, the second storage means 2 may be distributed over different memory devices, so that e.g. one part of the second storage means is formed within a non-volatile memory device and the other part within a volatile random access memory, like e.g. a DRAM. The electronic equipment for wireless communication 1 further comprises a ROM 4 and possibly a controller 5, which are required for the initial booting of the data processing system on the mobile terminal 1.

Currently, two different methods are commonly used for executing program code in mobile terminals 1. The first method executes the program code in place (XIP), i.e. in the non-volatile memory, usually a flash memory. Nowadays, a further method is gaining importance, according to which the executable program code data are stored in a non-volatile memory like a NAND memory, from which an executable instance of the program code is created in a random access memory (RAM), with the execution of the program code started from there.

A NAND flash memory represents an inexpensive type of memory in relation to other non-volatile memories presently available for mobile terminals. But NAND flash memories are currently not well suited for executing program code since, due to their sequential method of accessing data, an execution of program is slowed down considerably when compared to memories with random access. The other type of non-volatile memory commonly used in mobile terminals 1 is a NOR flash memory. It supports high-speed random access with a parallel NOR memory cell architecture. Its main disadvantage is its relatively high price, which is currently considerably higher than that of a NAND flash memory of the same capacity.

With the increase of functions provided on a mobile terminal 1, the executable program code on such an electronic equipment for wireless communication gets quite big in size. The storage of the program code in a flash memory provides a considerable contribution to the production cost of a respective mobile terminal 1. Flash memories are available in staggered sizes with the capacity of the next higher size usually being the double of the preceding lower size. When the executable program code exceeds the size of a memory device initially intended to store the code, a switch to the next bigger memory causes a considerable increase in the production cost for the mobile terminal 1. For a more efficient usage of the available memory space, the program code data are compressed before being flashed, i.e. stored into the non-volatile memory of the mobile terminal. Since it is not possible to directly execute compressed program code, the compressed code is uncompressed first and then downloaded into a RAM when prepared for execution. Depending on the non-volatile memory used, two different scenarios are provided for an effective usage of the memory space available on the mobile terminal.

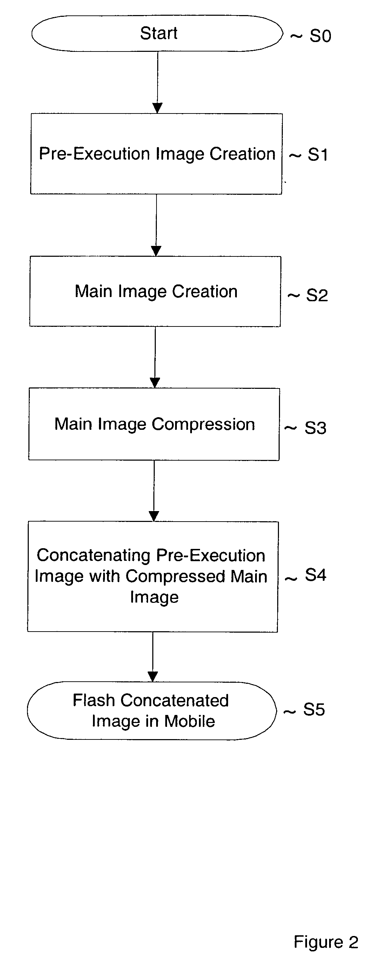

The basic steps of a first embodiment of the present invention for providing a compact storage of program code data are shown in the flow chart of Fig. 2. The compression of the executable program code data is part of the software development and production process for a mobile terminal 1. After the initialisation of the method for providing a compact form of the software program code used on a mobile terminal in step S0, a pre-execution image is created in step S1. The term 'image' or 'software image' is used to describe an executable, binary instance of a software, namely an executable instance of program code data. The pre-execution software image contains the initialising part comprising the logic for uncompressing compressed program code and copying the uncompressed code into a RAM for being launched from there. The pre-execution software image executes program code without any access to an operating system.

The operating system and all applications running thereon are part of the main software image which is created in step S2. The main image is next compressed in step S3, and the compressed main image is then concatenated with the pre-execution image in step S4 before being flashed into a non-volatile memory of a mobile terminal 1 in step S5. Additionally, the software image can be signed with a certificate, whereby either the pre-execution image and the main software image are signed or the program data set formed by the concatenation of the pre-execution image and compressed main software image is alternatively signed with the certificate.

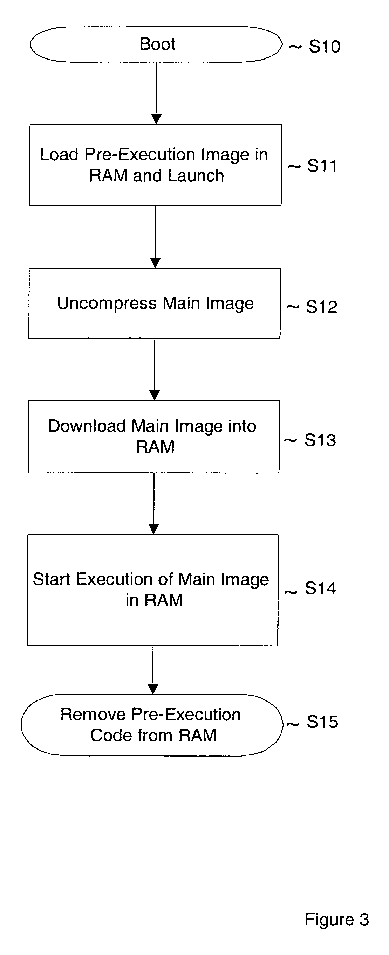

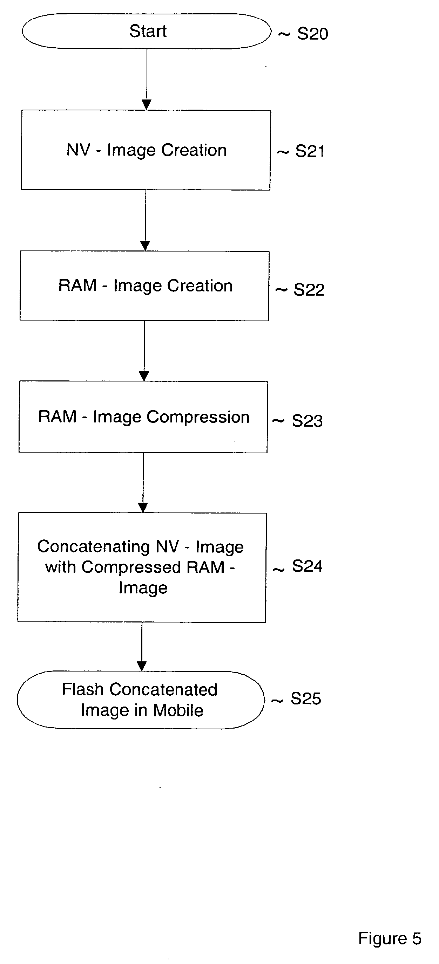

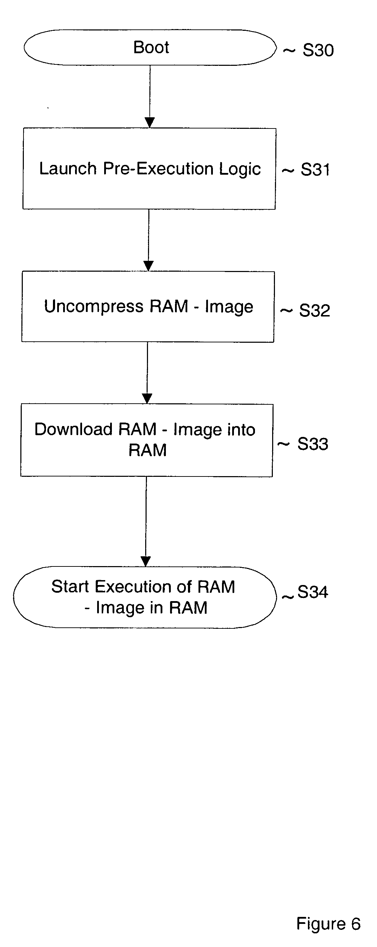

The procedure necessary for forming an executable instance of the program code contained in the concatenated image on the mobile terminal 1 is illustrated in Fig. 3. The procedure starts in step S10 with executing the initial boot code provided in a ROM 4 on the mobile terminal 1. The ROM boot code copies the pre-execution image into a RAM and launches the execution of the pre-execution program code from the RAM in step S11. In the next step S12, the decompression logic of the pre-execution image decompresses the main image, and in step S13, the decompressed main code is copied into the RAM form where the execution of the main code is finally started in step S14. In the end, the no longer needed pre-execution code is removed from the RAM in step S15.

When using part of the NAND flash memory for storing the concatenated image on the mobile terminal 1, the boot sequence may be at least partly executed by a controller that some of the NAND vendors provide. These types of controllers allow to store a small code segment enabling to copy a bigger code segment from the NAND flash memory to the RAM, thus making it possible to execute a more complex startup logic from the RAM.

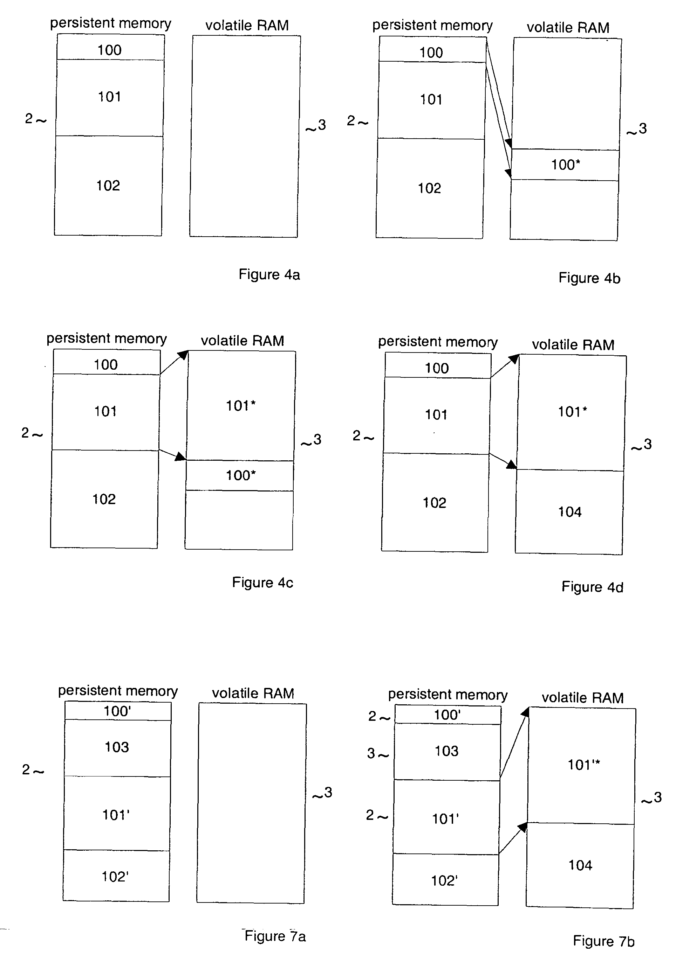

Figures 4a to 4d show the memory management according to a process shown in Fig. 3. The persistent memory shown on the left side of Fig. 4a corresponds to the first storage means 2 of Fig. 1. Usually a NAND flash memory will be used hereby. The memory contains the pre-execution code 100 and the compressed main image 101, which together form the concatenated image. The remaining part 102 of the persistent memory is used for other data like e.g. the file system. On the right side, a volatile RAM is indicated which corresponds to the second storage means 3 of Fig. 1. When the mobile terminal is powered off, the second storage means 3 is empty. When the mobile terminal is powered on, a copy 100* of the pre-execution code 100 is put in the RAM by the initial boot code of a ROM or of a controller as shown in Fig. 4b. Next as shown in Fig. 4c, the pre-execution code 100* is executed for decompressing the compressed main image 101 and storing a copy 101* of decompressed main image in a further section of the volatile RAM. Finally, the pre-execution code copy 100* is removed from the volatile RAM, and the main image is executed as shown in Fig. 4d. The remaining space 104 in the RAM is used for other purposes like e.g. storing stacks, heaps and the like.

Some non-volatile memory devices like e.g. a NOR flash memory allow to execute a program code in place, i.e. within the non-volatile memory device itself. Utilising space available on a non-volatile memory enables an optimised usage of the complete memory space available on a mobile terminal 1. Referring to Figure 5, when starting the software preparation in step S20, not only a pre-execution image 100' is created in step S21 but a non-volatile software image which contains the pre-execution image 100' and some program code data 103 which are intended to be executed within the memory space available in the non-volatile memory. The pre-execution image contains the logic on how to uncompress code intended to be copied and executed in a volatile RAM area, and how to launch the total program code 103 and 101'* now distributed between the non-volatile memory and the volatile RAM as shown in Figure 7a and 7b. Next in step S22, the RAM image 101'* is created, which contains the part of the main program code which is to be executed in the volatile RAM area of a mobile terminal. This RAM image is then compressed in step S23 and concatenated with the non-volatile image in step S24 before the concatenated image 100' + 103 + 101' is flashed into the mobile terminal in step S25.

Fig. 6 shows the steps required for executing the program code contained in the concatenated image stored in the non-volatile memory of the mobile terminal 1. A boot code, provided e.g. in a ROM area of the mobile terminal is launched in step S30 and transfers in step S31 the control to the pre-execution logic, which is now executed within the non-volatile first storage means 2. The decompression logic, which is present in the pre-execution code decompresses the RAM image in step S32 and downloads the decompressed RAM image 101' * in step S33 gradually into the volatile RAM. Finally, in step S34 the pre-execution code launches the main code execution 103+101'*, both in the non-volatile memory and in the volatile RAM.

The memory management corresponding to the method of Fig. 6 is illustrated in Fig. 7a and 7b. Fig. 7a shows the memory occupancy for the mobile terminal being powered-off while Fig. 7b shows the memory occupancy for the mobile terminal when being powered-on. In the off-state, the mobile terminal's non-volatile, i.e. persistent memory, which is adapted for program execution in place, contains the concatenated software image 100' + 103 + 101' and a part 102' that is available for other data like for instance the file system. The concatenated software image comprises three sections, the pre-execution code 100'; the compressed part 101' of the main software image, and the not compressed part 103 of the main software image, which is to be executed from within the non-volatile memory. The volatile memory is empty at this stage. When the mobile terminal is powered-on the compressed part 101' of the main image is decompressed and copied to an area in the volatile RAM which now forms one part of the second storage means 3 shown in Fig. 1. The remaining not occupied part 104 of the RAM is usually used for storing stacks and heaps and the like. The non-compressed part 103 of the main image is executed in place in the persistent memory so that the space occupied by it in the non-volatile memory now changes from being part of the first storage means 2 to being a part of the second storage means 3 as schematically indicated in Fig. 1. Thus, the execution of the main program code data is partitioned between the non-volatile, persistent memory and the volatile RAM enabling a splitted execution of the main program code.

The present invention enables a compact storage of software required for the operation of electronic equipment for wireless communication in a persistent memory of the respective appliance. When using for example a NAND flash memory, the storage space required for taking in the executable program code can be reduced by about 50%. Under the assumption, that the size of the program code is about 16 MB and that it is possible to compress the code by 50%, an 8 MB NAND flash memory can be used, which corresponds to a saving in production cost of at least 1 US$ per mobile terminal.

When using a NOR flash memory, the compression technique according to the present invention provides full flexibility in splitting the program code to be executed between the flash memory and the volatile RAM, which allows to optimise the total memory cost.

## Claims

1. An electronic equipment for wireless communication, comprising:
- first storage means (2) for a non-volatile storage of data
- program code data (100, 101, 100', 103, 101') stored in the first storage means (2), and
- second storage means (3) being adapted to enable an execution of an executable instance (101*, 101'*, 103) of program code data,
**characterised in**
**that** the program code data (100, 101, 103, 100', 101') stored in the first storage means (2) comprise first program code data (101, 101') in compressed form and further code data (100, 100', 103) in non-compressed form, with the further code data comprising second program code data (101, 101') that are adapted to convert the first program code data (101, 101') into an executable instance (101*, 101'*) of the same and to transfer said executable instance to the second storage means (3).

2. An electronic equipment according to claim 1,
**characterised in**
**that** at least a first part of the second storage means (3) is located within a volatile memory.

3. An electronic equipment according to claim 1 or 2,
**characterised in**
**that** the first storage means (2) is located in a memory with sequential access.

4. An electronic equipment according to claim 1 or 2
**characterised in**
**that** the first storage means (2) is located in a memory with random access.

5. An electronic equipment according to claim 4,
**characterised in**
**that** a further part of the second storage means (3) is located within the same physical storage device as the first storage means (2).

6. An electronic equipment according to claim 5
**characterised in**
**that** the further code data further comprise third program code data (103), which are stored in the further part of the second storage means (3), and which are adapted to be executed in place.

7. An electronic equipment according to one of the claims 1 to 6,
**characterised in**
**that** the second program code data (100, 100') are launched by use of an initial boot code provided in a read only memory (4) of the electronic equipment.

8. An electronic equipment according to one of the claims 1 to 6,
**characterised in**
**that** the second program code data (100, 100') is launched by use of a controller (5) being adapted to execute a code segment, which is stored within the controller, and which enables a launch of the second program code data.

9. An electronic equipment according to one of the claims 1 to 8,
**characterised in**
**that** the electronic equipment (1) is formed by a mobile radio terminal.

10. A method for a memory space saving storage of program code on an electronic equipment for wireless communication, the method comprising steps for:
- preparing (S2, S22) first program code data (101*, 101'*) representing a first program code,
- preparing (S1, S21) further code data (100, 100', 103) comprising second program code data (100, 100') representing a second program code,
- compressing (S3, S23) the first program code data, and
- transferring (S5, S25) the compressed first program code data (101, 101') and the further code data (100, 100') to a non-volatile memory of the electronic equipment for wireless communication (1),
**characterised in**
**that** the second program code data (100, 100') comprise a logic, which performs upon being executed on the electronic equipment for wireless communication a conversion of the compressed first program code data (101, 101') in an executable instance (101*, 101'*) of the first program code data and a transfer of the executable instance (101*, 101'*) of the first program code data to a data to a memory adapted for an execution of program code.

11. A method according to claim 10,
**characterised in**
**that** the step (S21) for preparing further code data (100, 100', 103) comprises an inclusion of third program code data (100, 100', 103) adapted for an execution in place within the non-volatile memory.

12. A method according to claim 10 or 11,
**characterised in**
**that** the method comprises a further step (S4, S24) for concatenating the compressed first program code data (101, 101') and the further code data (100, 100', 103) to a program data set and transferring the compressed first program code data and the further code data in form of the program data set to the non-volatile memory of the electronic equipment for wireless communication (1).

13. A method according to claim 10, 11 or 12,
**characterised in**
**that** the first program code data and the further code data or the program data set are signed with a certificate.
